# EUROPÄISCHE PATENTSCHRIFT

(11) **EP 2 326 847 B1**
(45) Veröffentlichungstag und Bekanntmachung des Hinweises auf die Patenterteilung: **29.02.2012**
(21) Anmeldenummer: 09778686.7
(22) Anmeldetag: 23.09.2009
(51) Int. Cl.: F16B 19/10, B60R 13/02, F16B 21/08

(54) **BEFESTIGUNGSVORRICHTUNG**
FASTENING DEVICE
DISPOSITIF DE FIXATION

(30) Priorität: 24.09.2008 DE 202008012698 U
(43) Veröffentlichungstag der Anmeldung: 01.06.2011
(73) Patentinhaber: TRW Automotive Electronics & Components GmbH, 78315 Radolfzell (DE)
(72) Erfinder: LOEWE, Hubert, 66919 Weselberg (DE); HOFMANN, Juergen, 67304 Eisenberg (DE)
(74) Vertreter: Kitzhofer, Thomas
(86) Internationale Anmeldenummer: PCT/EP2009/006887
(87) Internationale Veröffentlichungsnummer: WO 2010/034486

(56) Entgegenhaltungen:
- EP-A- 1 958 825
- US-A- 5 211 519

## Beschreibung

Die Erfindung betrifft eine Befestigungsvorrichtung zur Befestigung eines Anbauelements, insbesondere einer Tür- oder Wandverkleidung, an einem Träger, insbesondere einem Karosserieteil eines Kraftfahrzeugs,- wobei die Befestigungsvorrichtung eine Vormontagestellung und eine Endmontagestellung einnehmen kann, mit einem Verbindungsteil, das mit dem Anbauelement verbindbar ist und eine axiale Montagerichtung definiert, und einem Eingriffsteil zur Verriegelung der Befestigungsvorrichtung in oder hinter einer Öffnung des Trägers, wobei das Eingriffsteil oder das Verbindungsteil angeformte Funktionselemente hat, die in Wechselwirkung mit dem Verbindungsteil bzw. dem Eingriffsteil eine Endmontagestellung der Befestigungsvorrichtung räumlich festlegen.

Solche Befestigungsvorrichtungen, die insbesondere in der Automobilindustrie eingesetzt werden, sollen eine zuverlässige und möglichst dichte Verbindung zwischen einem Träger (Karosserieteil) und einem Anbauelement (Tür- oder Wandverkleidung) herstellen. Es sind einteilige ebenso wie mehrteilige Befestigungsvorrichtungen bekannt. Bei den einteiligen Lösungen ist nachteilige festzustellen, daß bei mehrmaliger Montage/Demontage die Abzugskräfte (Haltekräfte) deutlich abfallen. Dieser Nachteil kann durch mehrteilige Lösungen kompensiert werden.

Eine Befestigungsvorrichtung der eingangs genannten Art ist in der EP 1 958 825 A2 gezeigt. Bei dieser mehrteiligen Befestigungsvorrichtung hat das Eingriffsteil einstückig angeformte Rastelemente, die in der Vormontagestellung in eine erste Nut und in der Endmontagestelle in eine zweite Nut des Verbindungsteils eingreifen.

Ein Nachteil der mehrteiligen Lösungen besteht - abgesehen von den höheren Kosten aufgrund der höheren Anzahl der Einzelteile - in dem hohen Aufbau über dem Träger. Je nach Einbaubedingungen können deshalb mehrteilige Befestigungsvorrichtungen möglicherweise nicht an allen vorgesehenen Befestigungspositionen verbaut werden.

Aus der US 5,211,519 A ist eine Befestigungsvorrichtung mit den Merkmalen des Oberbegriffs des Anspruchs 1 bekannt, die zur Befestigung von zwei oder mehreren Platten aufeinander dient. Die Platten werden nicht am Verbindungsteil der Befestigungsvorrichtung verbunden, sondern aufeinandergelegt und durch Niederdrücken des Verbindungsteils in das in die Öffnungen der Platte eingesetzte Eingriffsteil aneinander befestigt.

Aufgabe der Erfindung ist es, eine kostengünstig herstellbare Befestigungsvorrichtung zu schaffen, die in der Endmontagestellung eine geringe Bauhöhe über dem Träger aufweist.

Gelöst wird diese Aufgabe durch eine Befestigungsvorrichtung mit den Merkmalen des Anspruchs 1. Vorteilhafte Weiterbildungen der Erfindung sind in den Unteransprüchen angegeben.

Bei der erfindungsgemäßen Befestigungsvorrichtung sind die Funktionselemente so angeordnet, daß sie sich in der Endmontagestellung zumindest größtenteils hinter dem Träger befinden. Diese besondere Anordnung der Funktionselemente erlaubt es, die Bauhöhe der Befestigungsvorrichtung vor dem Träger deutlich zu verkleinern. Somit ragt die Befestigungsvorrichtung z. B. im Falle der Befestigung einer Innenverkleidung an einem Karosserieteil nicht unnötig weit in den Innenraum und kann an beliebiger Position verbaut werden.

Außerdem weist das Verbindungsteil der erfindungsgemäßen Befestigungsvorrichtung Halteelemente auf, die in der Vormontagestellung Spreizelemente des Eingriffsteils am Spreizen hindern.

Die Funktionselemente sind bei der bevorzugten Ausführungsform der Erfindung Rastelemente, die in der Endmontagestellung in einem Funktionsbereich des Verbindungsteils bzw. des Eingriffsteils, insbesondere in einem Nutbereich, eingerastet sind.

Vorzugsweise sind die Funktionselemente an der Unterseite eines Flanschabschnitts des Eingriffsteils gebildet. Es gibt grundsätzlich aber auch andere Möglichkeiten, die Funktionselemente so anzuordnen, daß sie sich in der Endmöntagestellung zumindest größtenteils hinter dem Träger befinden.

Um ein unerwünschter. Spreizen der Spreizelemente zu einem zu frühen Zeitpunkt effektiv zu verhindern, weisen die Halteelemente und die Spreizelemente erste Sperrflächen auf, die einander in der Vormontagestellung, nicht jedoch in der Endmontagestellung gegenüberliegen, wobei die ersten Sperrflächen der Halteelemente radial nach innen und die ersten Sperrflächen der Spreizelemente radial nach außen weisen.

Eine Sicherung der Spreizelemente praktisch über den gesamten Einschubweg des Verbindungsteils kann dadurch gewährleistet werden, daß die ersten Sperrflächen einen Überlappungsbereich haben, dessen axiale Ausdehnung nur geringfügig kleiner als eine Wegstrecke ist, die das Verbindungsteil relativ zum Eingriffsteil zur Überführung der Befestigungsvorrichtung aus der Vormontagestellung in die Endmontagestellung zurücklegen muß.

Um bei der Demontage der Befestigungsvorrichtung ein Verhaken der Halteelemente des Verbindungsteils am hinteren Rand der Trägeröffnung effektiv zu verhindern, weisen die Halteelemente und die Spreizelemente bevorzugt zweite Sperrflächen auf, die einander in der Vormontagestellung gegenüberliegen, wobei die zweiten Sperrflächen der Halteelemente radial nach außen und die zweiten Sperrflächen der Spreizelemente radial nach innen weisen.

Weitere Merkmale und Vorteile der Erfindung ergeben sich aus der nachfolgenden Beschreibung und aus den beigefügten Zeichnungen, auf die Bezug genommen wird. In den Zeichnungen zeigen:
- Figur 1 eine perspektivische Explosionsdarstellung einer erfindungsgemäßen Befestigungsvorrichtung;
- Figuren 2a und 2b das Verbindungsteil der Befestigungsvorrichtung in perspektivischen Ansichten;
- Figuren 3a und 3b das Eingriffsteil der Befestigungsvorrichtung in perspektivischer Ansichten;
- Figuren 4a und 4b perspektivische Ansichten der Befestigungsvorrichtung in der Vormontagestellung;
- Figuren 5a und 5b perspektivische Schnittansichten der Befestigungsvorrichtung in der Vormontagestellung;
- Figuren 6a und 6b perspektivische Ansichten der Befestigungsvorrichtung in der Endmontagestellung;
- Figuren 7a und 7b perspektivische Schnittansichten der Befestigungsvorrichtung in der Endmontagestellung; und
- Figur 8 eine perspektivische Explosionsdarstellung einer erfindungsgemäßen Befestigungsvorrichtung nach einer anderen Ausführungsform.

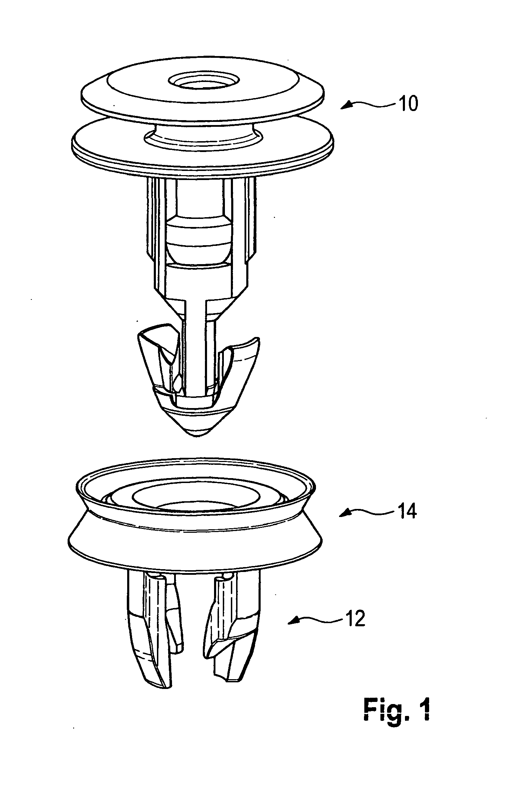

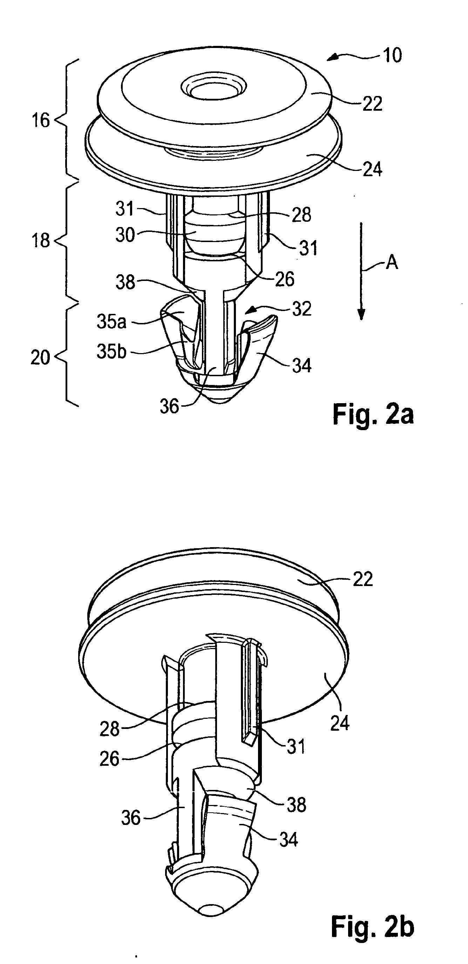

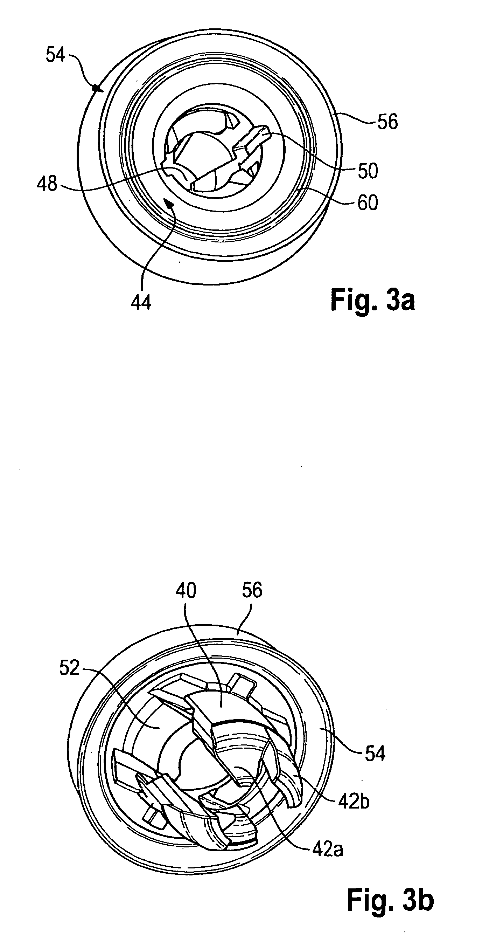

Die in Figur 1 dargestellte Befestigungsvorrichtung eignet sich insbesondere zur Befestigung einer Tür- oder Wandverkleidung an einem Karosserieteil eines Kraftfahrzeugs. Die Befestigungsvorrichtung besteht aus einem Verbindungsteil 10, einem Eingriffsteil 12 und einem (optionalen) Dichtungselement 14, die jeweils aus Kunststoff gefertigt sind. Das Verbindungsteil 10 ist in den Figuren 2a und 2b einzeln gezeigt, das Eingriffsteil 12 mit dem Dichtungselement 14 in den Figuren 3a und 3b. Weitere Einzelteile sind für die Befestigungsvorrichtung nicht vorgesehen.

Das Verbindungsteil 10 (Figuren 2a und 2b) definiert eine axiale Montagerichtung A und kann in einen Oberteil 16, einen Zwischenteil 18 und einen Unterteil 20 unterteilt werden. Der Oberteil 16 weist zwei axial beabstandete Radialflansche 22, 24 auf, die in ein (hier nicht dargestelltes) Verriegelungsteil (Retainer) des zu befestigenden Anbauelements einschiebbar sind. Der Zwischenteil 18 hat zwei Nutbereiche 26, 28, die durch einen Zwischenhals 30 voneinander getrennt sind. Außerdem weist der Zwischenteil 18 radial vorstehende, sich in axialer Richtung erstreckende Führungsrippen 31 auf. Der Unterteil 20 weist Einlagerungsbereiche 32 für Spreizelemente des Eingriffsteils 12 auf. Die Einlagerungsbereiche 32 sind durch endseitig am Unterteil 20 einstückig angeformte Halteelemente 34 in Form von Pfeilsegmenten begrenzt. Die Halteelemente 34 weisen radial nach innen weisende erste und radial nach außen weisende zweite Sperrflächen 35a bzw. 35b auf. Die Einlagerungsbereiche 32 sind durch Stege 36 voneinander getrennt. Nach oben schließt sich an die Einlagerungsbereiche 32 ein sich konisch aufweitender Abschnitt 38 zum Spreizen der Spreizelemente des Eingriffsteils 12 an.

Das Eingriffsteil 12 (Figuren 3a und 3b) hat mehrere Funktionselemente in Form von Spreizelementen 40. Im dargestellten Ausführungsbeispiel sind zwei einander gegenüberliegende, konisch zulaufende Spreizelemente 40 vorgesehen. Die Spreizelemente 40 weisen konisch zulaufende Abschnitte (Flügel) 40a mit radial nach außen weisenden ersten und radial nach innen weisenden zweiten Sperrflächen 42a bzw. 42b auf, die mit den ersten und zweiten Sperrflächen 35a bzw. 35b des Verbindungsteils 10 zusammenwirken, wie später noch erläutert wird. An die Spreizelemente 40 schließt sich ein Flanschabschnitt 44 an, der eine zentrale Öffnung 48 für den Durchtritt des Verbindungsteils 10 umgibt. Auf der Innenseite des Flanschabschnitts 44 sind Führungsnuten 50 gebildet. Von der Unterseite des Flanschabschnitts 44 erstrecken sich radial nach innen gerichtete Rastelemente 52, die ebenfalls als Funktionselemente dienen, wie später noch erläutert wird.

Das Dichtungselement 14 (Figuren 3a und 3b) ist bei der Ausführungsform gemäß Figur 1 direkt an das Eingriffsteil 12 angespritzt. Das Dichtungselement 14 ist weicher als das Eingriffsteil 12 und weist einen ersten Dichtabschnitt 54 für eine axiale Abdichtung zum Träger und einen zweiten Dichtabschnitt 56 für eine axiale Abdichtung zum Verbindungsteil 10 auf. Ebenso wie das Eingriffsteil 12 hat das Dichtungselement 14 eine zentrale Öffnung 60 für den Durchtritt des Verbindungsteils 10.

Die Befestigungsvorrichtung ist so ausgelegt, daß sie eine Vormontagestellung und eine Endmontagestellung einnehmen kann. Die Vormontagestellung entspricht dem Lager- und Lieferzustand der Befestigungsvorrichtung, während die Endmontagestellung nach der Montage eine sichere Befestigung des Anbauelements am Träger gewährleistet. Im Falle einer Demontage nimmt die Befestigungsvorrichtung wieder die Vormontagestellung ein und verbleibt in dieser.

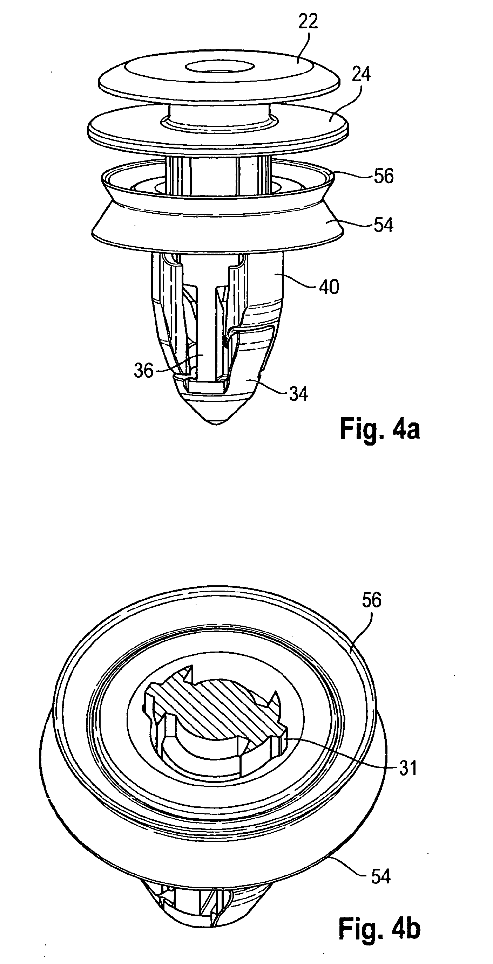

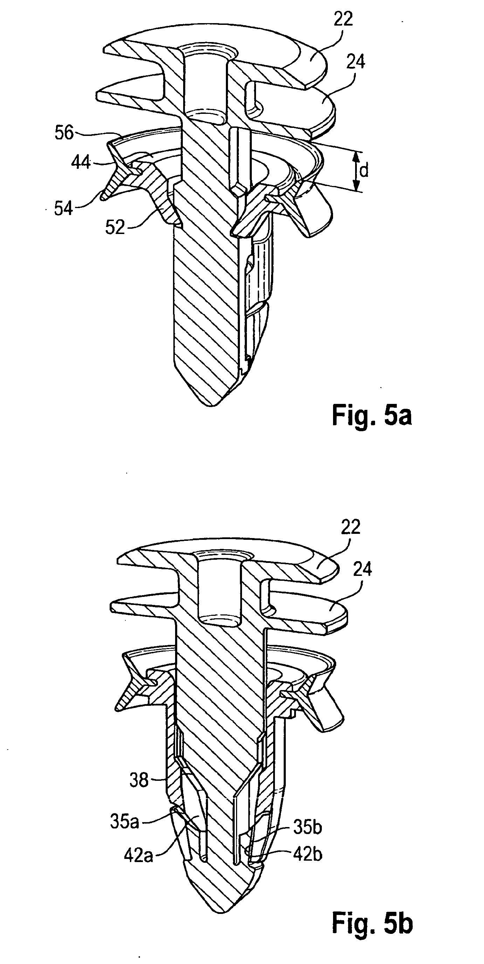

Die Vormontagestellung der Befestigungsvorrichtung ist in den Figuren 4a und 4b sowie im Längsschnitt in den Figuren 5a und 5b gezeigt. Die Führungsrippen 31 des Verbindungsteils 10 befinden sich in den Führungsnuten 50 des Eingriffsteils 12, so daß sich das Eingriffsteil 12 nicht im Verbindungsteil 10 drehen kann (siehe Figur 4b, in der das Verbindungsteil im Querschnitt dargestellt ist). Das Verbindungsteil 10 ist so weit durch die zentralen Öffnungen 48, 60 in das Eingriffsteil 12 eingeschoben, daß die Rastelemente 52 des Eingriffsteils 12 in den ersten Nutbereich 26 des Verbindungsteils 10 verrastet sind. Der erste Nutbereich 26 dient somit als Funktionsbereich, der mit den Funktionselementen (Rastelemente 52) des Eingriffsteils 12 zusammenwirkt (siehe Figur 5a). Die Einzelteile der Befestigungsvorrichtung sind auf diese Weise unverlierbar miteinander verbunden und bilden eine lager- und transportfähige Einheit.

Zwischen der Unterseite des unteren Flansches 24 des Verbindungsteils 10 und der Oberseite des Dichtungselements 14 liegt in der Vormontagestellung ein Abstand d vor. Die Spreizelemente 40 des Eingriffsteils 12 befinden sich in den Einlagerungsbereichen 32 des Verbindungsteils 10, wobei die konisch zulaufenden unteren Abschnitte (Flügel) 40a der Spreizelemente 40 von den Halteelementen 34 des Verbindungsteils 10 zurückgehalten werden. Genauer gesagt sorgen die nach innen weisenden ersten Sperrflächen 35a der Halteelemente 34, die den korrespondierenden nach außen weisenden Sperrflächen 42a der Spreizelemente 40 gegenüberliegen, dafür, daß sich die Spreizelemente 40 nicht radial nach außen bewegen können. Somit läßt sich die Befestigungsvorrichtung in der Vormontagestellung in die Montageöffnung eines Trägers einschieben.

Die ersten Sperrflächen 35a und 42a haben in axialer Richtung einen großen Überlappungsbereich, der ein problemloses Einschieben bis zu einer Position gewährleistet, in der der Flanschabschnitt 44 des Eingriffsteils 12 auf dem Träger aufliegt (direkt oder indirekt, je nachdem ob ein Dichtungselement 14 vorgesehen ist oder nicht). Dies wird nachfolgend kurz erläutert. Es besteht grundsätzlich die Möglichkeit, daß sich das Eingriffsteil 12 beim Einführen der Befestigungsvorrichtung am Rand der Trägeröffnung verklemmt (z. B. durch Verkippen). Wenn dann nur das Verbindungsteil 10 weiter eingeschoben wird und der axiale Überlappungsbereich der ersten Sperrflächen 35a und 42a zu klein ist, können die Halteelemente 34 außer Eingriff mit den Flügeln der Spreizelemente 40 gelangen, was ein zu frühes Spreizen der Spreizelemente 40 erlauben würde.

Außerdem liegen sich in der Vormontagestellung die nach innen weisenden zweiten Sperrflächen 42b der Spreizelemente 40 den nach außen weisenden Sperrflächen 35a der Halteelemente 34 gegenüber. Dies ist bei der Demontage von Bedeutung, die weiter unten erläutert wird.

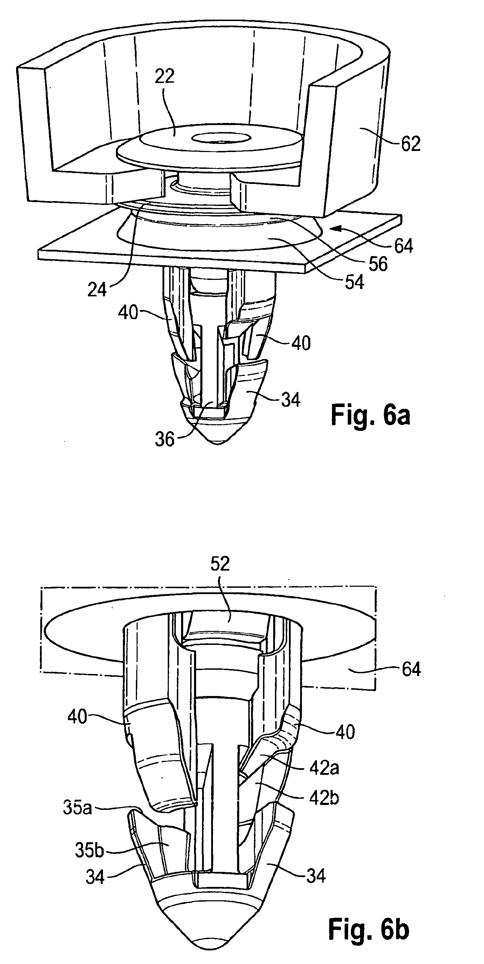

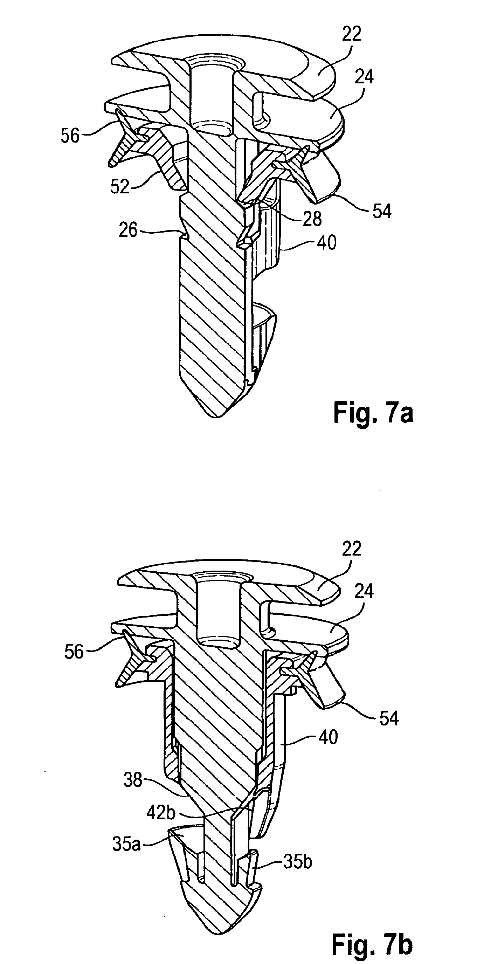

Um nun wie in den Figuren 6a und 6b gezeigt ein Anbauelement (Verkleidung) an einem Träger 64 (Karosserieteil, Fahrzeugblech) zu befestigen, wird das Verriegelungsteil 62 (Retainer) des Anbauelements so auf den Oberteil 16 des Verbindungsteils 10 aufgeschoben, daß es zwischen den Flanschen 22, 24 gehalten wird. Wird dann auf den Oberteil 16 in der Montagerichtung A ein Druck ausgeübt, so bewegt sich das Verbindungsteil 10 nach Überwindung der Haltekraft der Rastelemente 52 relativ zum Eingriffsteil 12, dessen Flanschabschnitt 44 auf dem Träger 64 aufliegt, in der Montagerichtung A, bis die Rastelemente 52 in Eingriff mit dem zweiten Nutbereich 28 des Verbindungsteils 10 gelangen (siehe Figur 7a). Gleichzeitig treten die Spreizelemente 40 des Eingriffsteils 12 aus den Einlagerungsbereichen 32 aus und werden durch den konischen Abschnitt 38 des Verbindungsteils 10 gespreizt (siehe Figur 7b), so daß sie fest an den Rand der Öffnung des Trägers 64 gedrückt werden.

Dies entspricht der Endmontagestellung der Befestigungsvorrichtung. Die gesamte Befestigungsvorrichtung ist sicher in der Öffnung des Trägers 64 verriegelt, so daß eine zuverlässige Befestigung des Anbauelements über das zwischen den Flanschen 22, 24 gehaltene Verriegelungsteil 62 am Träger 64 gewährleistet ist. Das Dichtungselement 14 beaufschlagt in dieser Stellung mit dem ersten Dichtabschnitt 54 die Oberseite des Trägers 64 und mit dem zweiten Dichtabschnitt 56 den unteren Flansch 24. Ebenso wie in der Vormontagestellung sind die Einzelteile der Befestigungsvorrichtung funktionssicher miteinander verbunden.

Eine Besonderheit der Befestigungsvorrichtung ist die Anordnung der Rastelemente 52 an der Unterseite des Flanschabschnitts 44 des Eingriffsteils 12, wodurch sichergestellt ist, daß sich die als Funktionselemente zur räumlichen Festlegung der Endmontagestellung dienenden Rastelemente 52 in der Endmontagestellung (zumindest größtenteils) hinter dem Träger 64 befinden. Gemäß der dargestellten Ausführungsform rasten die Rastelemente 52 hinter dem Träger 64 in den zweiten Nutbereich 28 des Verbindungsteils 10 ein. Dies erlaubt eine geringe Bauhöhe der Befestigungsvorrichtung, insbesondere desjenigen Abschnitts, der sich in der Endmontagestellung vor dem Träger 64 befindet.

Soll die Befestigungsvorrichtung wieder demontiert werden, so ist eine Zugkraft auf das Verbindungsteil 10 bzw. auf das Verriegelungsteil 62 des Anbauelements auszuüben, um das Verbindungsteil 10 relativ zum Eingriffsteil 12 entgegen der Montagerichtung A zu bewegen. Dadurch treten die Rastelemente 52 des Eingriffsteils 12 aus dem zweiten Nutbereich 28 des Verbindungsteils 10 aus und gelangen in den ersten Nutbereich 26. Gleichzeitig wird die Spreizung der Spreizelemente 40 aufgehoben, und diese lagern sich wieder in die Einlagerungsbereiche 32 des Verbindungsteils 10 ein. Dies entspricht der zuvor bereits beschriebenen Vormontagestellung. Die gesamte Befestigungsvorrichtung kann so in der Vormontagestellung aus der Öffnung des Trägers 64 entnommen werden, da der maximale Gesamtdurchmesser der Spreizelemente 40 in diesem Zustand nicht größer als der maximale Durchmesser der Halteelemente 34 des Verbindungsteils 10 ist.

Die zweiten Sperrflächen 35b und 42b gewährleisten, daß sich bei der Entnahme der Befestigungsvorrichtung die Halteelemente 34 des Verbindungsteils 10 nicht am Rand der Trägeröffnung verhaken. Die nach innen wesenden zweiten Sperrflächen 42b der Spreizelemente 40 liegen in der Vormontagestellung nämlich den nach außen weisenden Sperrflächen 35b der Halteelemente 34 gegenüber, so daß diese sicher gehalten sind und sich nicht radial nach außen bewegen können.

Die oben beschriebene Ausgestaltung der Befestigungsvorrichtung gewährleistet, daß auch bei mehrfacher Montage/Demontage die hierfür erforderlichen Kräfte weitgehend konstant bleiben.

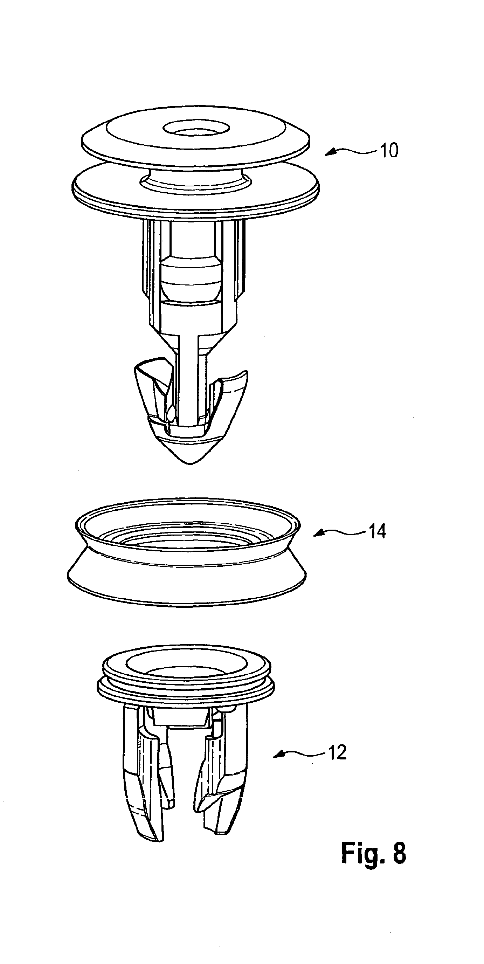

In Figur 8 ist eine weitere Ausführungsform der Erfindung dargestellt. Diese Ausführungsform unterscheidet sich von der zuvor beschriebenen nur dadurch, daß das Dichtungselement 14 nicht an das Eingriffsteil 12 angeformt, sondern als separat hergestelltes Teil formschlüssig auf das Eingriffsteil 12, genauer gesagt auf dessen Flanschabschnitt 44, aufgestülpt ist. Aufbau und Funktion des Verbindungsteils 10, des Eingriffsteils 12 und des Dichtungselements 14 sind die gleichen wie bei der zuvor beschriebenen Ausführungsform.

Gemäß einer vereinfachten Ausführungsform der Erfindung kann das Dichtungselement auch weggelassen sein.

Die Erfindung ist nicht auf die beschriebene Anwendung beschränkt. Vielmehr sind vielfältige Einsatzmöglichkeiten der erfindungsgemäßen Befestigungsvorrichtung in unterschiedlichen technischen Bereichen denkbar.

## Patentansprüche

1. Befestigungsvorrichtung zur Befestigung eines Anbauelements, insbesondere einer Tür- oder Wandverkleidung, an einem Träger (64), insbesondere einem Karosserieteil eines Kraftfahrzeugs, wobei die Befestigungsvorrichtung eine definierte Vormontagestellung und eine definierte Endmontagestellung einnehmen kann, mit
einem Verbindungsteil (10), das eine axiale Montagerichtung (A) definiert, und
einem Eingriffsteil (12) zur Verriegelung der Befestigungsvorrichtung in oder hinter einer Öffnung des Trägers (64),
wobei das Eingriffsteil (12) oder das Verbindungsteil (10) angeformte Funktionselemente (52) hat, die in Wechselwirkung mit dem Verbindungsteil (10) bzw. dem Eingriffsteil (12) eine Endmontagestellung der Befestigungsvorrichtung räumlich festlegen, und
wobei die Funktionselemente (52) so angeordnet sind, daß sie sich in der Endmontagestellung zumindest größtenteils hinter dem Träger (64) befinden,
**dadurch gekennzeichnet, daß** das Verbindungsteil (10) mit dem Anbauelement verbindbar ist und Halteelemente (34) aufweist, die in der Vormontagestellung Spreizelemente (40) des Eingriffsteils (12) am Spreizen hindern.

2. Befestigungsvorrichtung nach Anspruch 1, **dadurch gekennzeichnet, daß** die Funktionselemente Rastelemente (52) sind, die in der Endmontagestellung in einem Funktionsbereich (28) des Verbindungsteils (10) bzw. des Eingriffsteils (12), insbesondere in einen Nutbereich (28), eingerastet sind.

3. Befestigungsvorrichtung nach Anspruch 1 oder 2, **dadurch gekennzeichnet, daß** die Funktionselemente (52) an der Unterseite eines Flanschabschnitts (44) des Eingriffsteils (12) gebildet sind.

4. Befestigungsvorrichtung nach einem der vorhergehenden Ansprüche, **dadurch gekennzeichnet, daß** die Halteelemente (34) und die Spreizelemente (40) erste Sperrflächen (35a bzw. 42a) aufweisen, die einander in der Vormontagestellung, nicht jedoch in der Endmontagestellung gegenüberliegen, wobei die ersten Sperrflächen (35a) der Halteelemente (34) radial nach innen und die ersten Sperrflächen (42a) der Spreizelemente (40) radial nach außen weisen.

5. Befestigungsvorrichtung nach Anspruch 4, **dadurch gekennzeichnet, daß** die ersten Sperrflächen (35a, 42a) einen Überlappungsbereich haben, dessen axiale Ausdehnung nur geringfügig kleiner als eine Wegstrecke ist, die das Verbindungsteil (10) relativ zum Eingriffsteil (12) zur Überführung der Befestigungsvorrichtung aus der Vormontagestellung in die Endmontagestellung zurücklegen muß.

6. Befestigungsvorrichtung nach einem der vorhergehenden Ansprüche, **dadurch gekennzeichnet, daß** die Halteelemente (34) und die Spreizelemente (40) zweite Sperrflächen (35b bzw. 42b) aufweisen, die einander in der Vormontagestellung gegenüberliegen, wobei die zweiten Sperrflächen (35b) der Halteelemente (34) radial nach außen und die zweiten Sperrflächen (42b) der Spreizelemente (40) radial nach innen weisen.

## Claims

1. A fastening device for fastening a panel element, in particular a door lining or wall lining, to a carrier (64), in particular a body part of a motor vehicle, the fastening device being adapted to assume a defined preassembly position and a defined final assembly position, comprising
a connecting part (10) that defines an axial mounting direction (A), and
an engaging part (12) for locking the fastening device in or behind an opening of the carrier (64),
the engaging part (12) or the connecting part (10) having integrally molded functional elements (52) which, in interaction with the connecting part (10) or the engaging part (12), spatially define a final assembly position of the fastening device, and
the functional elements (52) being arranged such that in the final assembly position they are situated at least for the most part behind the carrier (64),
**characterized in that** the connecting part (10) is adapted to be connected with the panel element and includes holding elements (34) which, in the preassembly position, prevent expansion elements (40) of the engaging part (12) from expanding.

2. The fastening device as claimed in claim 1, **characterized in that** the functional elements are latching elements (52) which in the final assembly position are latched in place in a functional portion (28) of the connecting part (10) or of the engaging part (12), in particular in a groove portion (28).

3. The fastening device as claimed in claim 1 or 2, **characterized in that** the functional elements (52) are formed on the underside of a flange section (44) of the engaging part (12).

4. The fastening device as claimed in any of the preceding claims, **characterized in that** the holding elements (34) and the expansion elements (40) include first blocking surfaces (35a and 42a, respectively), which are located opposite each other in the preassembly position, but not in the final assembly position, the first blocking surfaces (35a) of the holding elements (34) facing radially inwards and the first blocking surfaces (42a) of the expansion elements (40) facing radially outwards.

5. The fastening device as claimed in claim 4, **characterized in that** the first blocking surfaces (35a, 42a) have an overlap region having an axial extent that is only slightly smaller than a distance which the connecting part (10) has to cover relative to the engaging part (12) for transferring the fastening device from the preassembly position to the final assembly position.

6. The fastening device as claimed in any of the preceding claims, **characterized in that** the holding elements (34) and the expansion elements (40) include second blocking surfaces (35b and 42b, respectively), which are located opposite each other in the preassembly position, the second blocking surfaces (35b) of the holding elements (34) facing radially outwards and the second blocking surfaces (42b) of the expansion elements (40) facing radially inwards.

## Revendications

1. Dispositif de fixation pour fixer un élément rapporté, en particulier un revêtement de porte ou de paroi, sur un support (64), en particulier sur une partie de carrosserie d'un véhicule automobile, le dispositif de fixation pouvant prendre une position de montage préalable définie et une position de montage définitif définie, comportant
une pièce de liaison (10) qui définit une direction de montage (A) axiale, et
une pièce d'engagement (12) pour verrouiller le dispositif de fixation dans ou derrière une ouverture du support (64),
la pièce d'engagement (12) ou la pièce de liaison (10) ayant des éléments fonctionnels (52) conformés qui, en interaction avec la pièce de liaison (10) ou la pièce d'engagement (12), respectivement, déterminent dans l'espace une position de montage définitif du dispositif de fixation, et
les éléments fonctionnels (52) étant agencés de telle sorte que dans la position de montage définitif, ils se trouvent au moins en grande partie derrière le support (64),
**caractérisé en ce que** la pièce de liaison (10) peut être reliée à l'élément rapporté et présente des éléments de retenue (34) qui, dans la position de montage préalable, empêchent que des éléments à expansion (40) de la pièce d'engagement s'écartent.

2. Dispositif de fixation selon la revendication 1, **caractérisé en ce que** les éléments fonctionnels sont des éléments d'encliquetage (52) qui, dans la position de montage définitif, sont encliquetés dans une zone fonctionnelle (28) de la pièce de liaison (10) ou de la pièce d'engagement (12), respectivement, en particulier dans une zone de gorge (28).

3. Dispositif selon la revendication 1 ou 2, **caractérisé en ce que** les éléments fonctionnels (52) sont formés sur la face inférieure d'un tronçon de bride (44) de la pièce d'engagement (12).

4. Dispositif de fixation selon l'une des revendications précédentes **caractérisé en ce que** les éléments de retenue (34) et les éléments d'expansion (40) présentent des premières surfaces de blocage (35a, 42a) respectives qui sont opposées l'une à l'autre dans la position de montage préalable, mais pas dans la position de montage définitif, les premières surfaces de blocage (35a) des éléments de retenue (34) étant tournées radialement vers l'intérieur et les premières surfaces de blocage (42a) des éléments à expansion (40) étant tournées radialement vers l'extérieur.

5. Dispositif de fixation selon la revendication 4, **caractérisé en ce que** les premières surfaces de blocage (35a, 42a) ont une zone de chevauchement dont l'extension axiale n'est que légèrement inférieure à un trajet que doit parcourir la pièce de liaison (10) par rapport à la pièce d'engagement (12) pour amener le dispositif de fixation depuis la position de montage préalable dans la position montage définitif.

6. Dispositif de fixation selon l'une des revendications précédentes **caractérisé en ce que** les éléments de retenue (34) et les éléments à expansion (40) présentent des deuxièmes surfaces de blocage (35b, 42b) respectives qui sont opposées l'une à l'autre dans la position de montage préalable, les deuxièmes surfaces de blocage (35b) des éléments de retenue (34) étant tournées radialement vers l'extérieur et les deuxièmes surfaces de blocage (42a) des éléments à expansion (40) étant tournées radialement vers l'intérieur.
